# EUROPEAN PATENT APPLICATION

(11) **EP 0 839 876 A1**
(43) Date of publication of application: **06.05.1998**
(21) Application number: 97118664.8
(22) Date of filing: 28.10.1997
(51) Int. Cl.: C09D 5/02, C09G 1/04, C09G 1/16

(54) **Improved aqueous coating compositions**

(30) Priority: 31.10.1996 US 742187; 20.10.1997 US 953999
(71) Applicant: THE B.F. GOODRICH COMPANY, Richfield, Ohio 44286-9368 (US)
(72) Inventor: Myers, Michael Patrick, Barberton, Ohio 44203 (US); Lemma, Solomon, Shaker Heights, Ohio 44122 (US); Ambuter, Hal, Medina, Ohio 44256 (US); Bathina, Harinath B., Hudson, Ohio 44236 (US)
(74) Representative: von Kreisler, Alek, Dipl.-Chem.

(57) **Abstract**

An aqueous coating composition which includes an active material or composition dissolved, suspended, or emulsified in water, such as a solution or an oil-in-water emulsion, a stabilizing amount of a rheology modifying polymer, such as a crosslinked polyacrylic acid polymer, and a dynamic surface tension modifying agent, having a surface tension of less than 35 dynes per centimeter, such as a silicone glycol copolymer superwetting agent, for modifying the flow characteristics of the coating composition to provide an improved wetting or uniform coating of the deliverable composition. Coatings incorporating the present invention result in reduced spotting, filming, beading and streaking. As an example, the deliverable can be droplets of solvent, silicone, dimethicone, esters, waxes, mineral oil, napathenic or paraffinic hydrocarbons, and the like, or mixtures thereof.

## Description

### BACKGROUND OF THE INVENTION

This invention relates to improvements in aqueous coating compositions, where an active is dissolved, suspended, or emulsified in water. In particular, this invention relates to the use of the combination of a rheology modifying polymer and a super wetting agent to provide improved coating compositions.

As environmental and government regulations continue to require more environmentally-friendly products, consumer and industrial companies are reformulating their products to reduced or zero-solvent based systems. Unfortunately, the substitution of water-based compositions for solvent-based systems is not straight forward and often results in decreased application performance, increased chemical cost to compensate for lower performance, and higher complexity processing equipment. This is especially relevant to applications where the drying characteristics affect the end product performance as water-based systems dry differently than organic solvent-based systems.

For example, in the polish and coatings markets, various types of oils, polymers, and/or waxes are commonly employed to preserve, protect, renew, and enhance the appearance of concrete, wood, rubber, leather, metals, and various polymeric surfaces. These products are typically offered as oil-in-water emulsions and are usually accomplished by employing a combination of various emulsifying surfactants. However, the performance of these products may be less durable, as compared to solvent-based systems, due to the presence of residual surfactants in the coating and their tendency to re-emulsify when exposed to water or moisture. Selection of the surfactant system is also highly dependent on the oil type, loading level, and a variety of other factors. The durability of these surfactant based emulsions can be increased via the addition of various types of additives, such as amino-functional silicones. However, the addition of these materials greatly increases the chemical cost of these products.

Combinations of acrylic acid polymers, which are employed as thickeners, and surfactants are known, but their performance results are not always predictable. For example, U.S. Patent No. 4,686,254 notes that homopolymers of acrylic acid and anionic surfactants are not compatible and do not effectively suspend certain ingredients in the manufacture of personal care products.

Crosslinked hydrophobically modified polyacrylic acid polymers are often employed as the primary emulsifying agent instead of surfactants to improve the performance and stability of oil-in-water emulsions. The use of these polymers as primary emulsifiers for oil-in-water emulsion products is well known and used in the personal care, household, and industrial markets. U.S. Patent No. 5,004,598 teaches a process for making emulsions for topical cosmetic skin compositions. Patent Application WO 94/05731 to Chandarana et al., teaches the use of polymers as primary emulsifiers for automobile polishes and requires the application of the emulsion to the surface via heavy mechanical action. e.g., rubbing and buffing. U.S. Patent No. 5,338,345 to Scarborough et al.. teaches the use of polymeric emulsifiers in low viscosity oil-in-water emulsions, but requires the use of high shear homogenization to form the emulsion viscosity below 100 cP and an oil having a droplet size of less than 50 microns.

In other household cleaning and industrial specialty applications, the use of polymeric additives to provide suspension or emulsification of insolubles, rheology modification and vertical cling are well known, such as for example the starting formulations published in the BFGoodrich Detergents and Industrial Specialties Applications Product Binders. However, even though the addition of the polymeric additive improves some of the performance deficiencies of these products, there is room for further improvement. The addition of the polymeric additive can result in poor or incomplete surface wetting and surface residue upon drying. This is described in the literature as spotting and filming.

The use of wetting agents, also known as surfactants or surface active agents, in coating compositions is known, as noted above, since they are used to emulsify deliverables in the coating compositions. Wetting agents have been employed, for example, to improve the manufacture of polyacrylic polymers, such as U.S. Patent Nos. 4,345,949; 4,375,533; and 4,419,502. They have been employed to improve the wettability characteristics of polyacrylic acid polymers, which relates to getting the polymers into solution, as in U.S. Patent Nos. 5,373,044 and 5,468,797. This latter application involves the use of surfactants having a surface tension of less than 40 dynes/cm. However, these surfactants are also limited to use with sterically stabilized carboxylic acid polymers, and does not eliminate or improve spotting and/or filming in the final coating composition. The so called "superwetting" agents are a sub-class of wetting agents known for their ability to reduce surface tension substantially.

Although the use of polymers has greatly aided in the formulation of reduced solvent-based systems, there is still a need to improve the wetting and the ultimate drying characteristics of water-based coating formulations. A composition which wets or coats the surface being treated in a manner which leaves a uniform coating does not leave spots or bead-up, and/or eliminates or minimizes the rubbing step would be desirable. Such a coating also may require a relatively low viscosity in order for it to be applied by spraying.

### SUMMARY OF THE INVENTION

The present invention is the result of a discovery that the use of a combination of a small percentage of a super wetting agent with a surface tension of less than 35 dynes/cm and a rheology modifying polymer in aqueous compositions results in significantly improved surface wetting and uniform surface coating. The rheology modifying polymer can be a natural, modified natural or synthetic polymer, although crosslinked polycarboxylic polymers and copolymers are preferred. The aqueous coating composition contains an active material(s) which is dissolved, suspended, or emulsified in the water phase. The composition is dilution stable and can have a low viscosity, which is desirable for certain applications.

For example in one embodiment of the present invention, the active material is a solvent which is dissolved in the water. The combination of the superwetting agent and a rheology modifying polymeric additive allows the composition to be sprayed on to a vertical surface, such as glass, and exhibit vertical cling (i.e., it will not run or drip) resulting in increased surface contact time. The addition of the superwetting agent allows a uniform film to form which decreases the potential for spotting and filming to occur upon drying.

In another embodiment of the invention, the active material is silicone oil which is emulsified via the use of a rheology modifying agent. The addition of the superwetting agent allows this composition to be sprayed or rubbed, with uniform surface coverage onto, e.g., automotive surfaces, such as rubber tires and vinyl interior components,

Coating compositions employing the combination of the present invention can be applied by spraying, wiping, or pouring and leave a uniform coating having improved wetting characteristics which can be subjected to further wiping or buffing, if necessary, or left as a coating. They can be applied to a wide variety of surfaces including, but not limited to, glass, porcelain, fiberglass, concrete, leather, plastic metal ceramic, wood, and other industrial and household surfaces as well as a variety of personal care surfaces or applications, such as skin or hair care, and the like.

### DETAILED DESCRIPTION

In the present invention, the combination of a surface tension modifying agent, a rheology modifying polymer, and an active material, which can be dissolved, suspended, or emulsified in water are employed in aqueous coating compositions with improved wetting and/or uniform coating characteristics.

The surface tension modifying agent or superwetting agent is a highly efficient, low surface energy surfactant. The term dynamic surface tension modifying agent or superwetting agent is intended to mean any wetting agent or surfactant having an equilibrium surface tension of 35 or less dynes per centimeter at 0.1% concentration in water and as measured by the DuNouy method, preferably less than 31 dynes per centimeter, with less than 30 dynes per centimeter also being preferred. Examples of superwetting agents are as follows:

| Superwetting Agent | Equilibrium Surface Tension at 0.1% Concentration (dynes/cm) | Supplier | Chemical Description |
|---|---|---|---|
| Zonyl® FSO | 19.0 | E. I. duPont | Fluoro chemical with ethylene glycol |
| Fluorad® FC-171 | 20.0 | 3M Company | Fluorinated alkyl alkoxalate |
| DC Q2 5211 | 21.1 | Dow Corning | Polyoxy ethylene modified polydimethyl siloxane |
| Tergitol® 15-S-7 | 27.3 | Union Carbide | Mixture of linear secondary alcohols reacted with ethyleneoxide |
| Surfynol® TG | 30.4 | Air Products & Chemicals | 2,4,7,9-teramethyl-5-decyne-4,7-diol |
| Makon® OP-9 | 30.8 | Stepan Chemical | Octyl phenol with 9 moles of ethylene oxide |
| Fluowet OTN | 19.2 | Hoechst Celanese | Fluoroaliphatic oxyethylate |
| Forafac 1157N | 18.9 | Atochem | Polyfluoroalkyl betaine |
| Fluorad FS-170C | 21.2 | 3M Company | Fluorinated alkyl polyoxy ethylene ethanol |
| Silwet L-77 | 21.3 | Union Carbide | Polyalkylene oxide modified heptamethyl trisiloxane |
| Fluorad FC-120 | 22.4 | 3M Company | Ammonium perfluoroalkyl sulfonate |
| Zonyl FSP | 24.4 | E. I. duPont | Ammoniated phosphate fluorochemical |
| Zonyl FSN | 24.4 | E. I. duPont | Hydroxy terminated fluorochemical |
| Silwet L-7600 | 25.2 | Union Carbide | Polyalkylene oxide modified polydimethyl siloxane |
| Silwet L-7604 | 24.8 | Union Carbide | Polyalkylene oxide modified polydimethyl siloxane |

The superwetting agent provides improved wetting or uniformity of the coating composition. The superwetting agent alone or in combination with other superwetting agents is present in an amount of less than 10% by weight based upon the weight of the coating composition. The preferred range is about 0.01 to about 10% by weight, with the ranges of about 0.05 to 5% by weight, about 0.1 to 5% by weight, and about 0.1 to about 2% by weight being further preferred. DC Q2-5211 is a silicone glycol copolymer, with poly-oxyethylene-modified polydimethyl-siloxane and is preferred for silicone oil emulsions, while Zonyl FSP superwetting agent is preferred for solvent solutions.

The rheology modifying agent is used in amount of about 0.001 to about 10% by weight based upon the weight of the coating composition. The range of about 0.01 to about 5% by weight is preferred, with the range of about 0.05 to about 1% by weight being further preferred. The rheology modifying agent can be a natural or modified natural polymer, such as gums (e.g., xanthan gum), cellulosics, modified cellulosics, starches, other polysaccharides and the like, or a synthetic polymer, such as a homopolymer or a copolymer of an olefinically unsaturated carboxylic acid or anhydride monomers containing at least one activated carbon to carbon olefinic double bond and at least one carboxyl group. The copolymers are preferably of a polycarboxylic acid monomer and a hydrophobic monomer. The preferred carboxylic acid is acrylic acid. The homopolymers and copolymers preferably are crosslinked. Crosslinked polyacrylic acid copolymers are further preferred since, in addition to modifying the rheology of the coating composition, they can function as the primary emulsifier or suspending agent for the active which is being emulsified or suspended.

Homopolymers of polyacrylic acid are described, for example, in U.S. Patent No. 2,798,053. Examples of homopolymers which are useful include Carbopol® 934, 940, 941, Ultrez 10, ETD 2050, and 974P polymers, which are available from The BF Goodrich Company. Hydrophobically modified polyacrylic acid polymers are described, for example, in U.S. Patent Nos. 3,915,921, 4,421,902, 4,509,949, 4,923,940, 4,996,274, 5,004,598, and 5,349,030. These polymers have a large water-loving hydrophilic portion (the polyacrylic acid portion) and a smaller oil-loving hydrophobic portion (which can be derived from a long carbon chain acrylate ester). The polymers can be dispersed in water and neutralized with base to thicken the aqueous composition, form a gel, or emulsify or suspend the deliverable. Useful polymers are sold as Carbopol® 1342 and 1382 and Pemulen® TR-1, TR-2, 1621, and 1622, all available from BFGoodrich. Other polycarboxylic acid polymer compositions which can be employed include, for example, crosslinked copolymers of acrylates, (meth)acrylic acid, maleic anhydride, and various combinations thereof. Commercial polymers are avalable from Rheox Inc., Highstown, N.J. (such as Rheolate® 5000 polymer), 3V Sigma, Bergamo, Italy (such as Stabyln 30 polymer, which is an acrylic acid/ vinyl ester copolymer, or Polygel polymer, which are acrylic acid polymers and copolymers), BF Goodrich (such as Carbopol EP-1 thickener, which is a acrylic emulsion thickener), or Rohm and Haas (such as Acrysol® ICS-1 thickener, which is an alkali-soluble acrylic polymer emulsion. Preferred are the Carbopol® and Pemulen® polymers, generally. The choice of the specific polymer to be employed will depend upon the type of active being delivered.

The carboxyl containing polymers are prepared from monomers containing at least one activated vinyl group and a carboxyl group. Such polymers are homopolymers of unsaturated, polymerizable carboxylic monomers such as acrylic acid, methacrylic acid, maleic acid, itaconic acid, maleic anhydride, and the like, and copolymers of polymerizable carboxylic monomers with acrylate esters, acrylamides, alkylated acrylamides, olefins, vinyl esters, vinyl ethers, or styrenics. The carboxyl containing polymers have molecular weights greater than about 500 to as high as several million, usually greater than about 10,000 to 900,000 or more.

Representative higher alkyl acrylic esters are decycl acrylate, lauryl acrylate, stearyl acrylate, behenyl acrylate and melissyl acrylate, and the corresponding methacrylates. These polymers are characterized in that they are prepared in a reaction medium containing an organic solvent and a hydrocarbon solvent in respective weight ratio of 95/5 to 1/99, the organic solvent being selected from ketones esters ethers and alcohols having solubility parameter in the range of 8 to 16 and the hydrocarbon solvent being selected from aliphatic and cyclic aliphatic alkanes containing 4 to 12 carbon atoms and non-benzene aromatics of 7 to 9 carbon atoms. The amounts of the carboxylic monomer and the acrylate ester or vinyl ester or ether or styrenic are based on the combined weight of both components. It should be understood that more than one carboxylic monomer and more than one acrylate ester or vinyl ester or ether or styrenic can be used in the monomer charge. Also useful are interpolymers of hydrophobically modified monomers and steric stabilizing polymeric surface active agents having at least one hydrophilic moiety and at least one hydrophobic moiety or a linear block or random comb configuration or mixtures thereof. Examples of steric stabilizers which can be used are Hypermer®, which is a poly(12-hydroxystearic acid)polymer, available from Imperial Chemical Industries Inc. and Pecosil®, which is a methyl-3-polyethoxypropyl siloxane-Ω-phosphate polymer, available from Phoenix Chemical, Somerville, New Jersey. These are taught by US patent Nos. 4,203,877 and 5,349,030, the disclosures of which are incorporated herein by reference.

The polymers can be crosslinked in a manner known in the art by including, in the monomer charge, a suitable crosslinker in amount of about 0.1 to 4%, preferably 0.2 to 1% by weight based on the combined weight of the carboxylic monomer and the comonomer(s). The crosslinker is selected from polymerizable monomers which contain a polymerizable vinyl group and at least one other polymerizable group.

Polymerization of the carboxyl-containing monomers is usually carried out in a catalyzed, free radical polymerization process, usually in inert diluents, as is known in the art.

The combination of a rheology modifying polymer and superwetting agent can be used in a variety of aqueous coating compositions to deliver the active ingredient. The aqueous coating composition can be solutions, oil-in-water emulsions, or water-based suspensions of the active ingredient.

Examples of actives include solvents (mineral spirits, mineral oil, naptha, petroleum distillants, alcohols, glycols, polar solvents, non-polar solvents, d-limonene), surfactants (including anionic, nonionic, and zwitterionic surfactants), various polymers such as low molecular weight acrylic polymers, alkyds, and urethanes, oils (natural and synthetic), waxes, ultra violet absorbers, builders, dispersants, oxidizing agents such as sodium hypochlorite or hydrogen peroxide, abrasives, pigments, inks, dyes, fragrances, enzymes, and various other actives. See, for example, U.S. Patent No. 5,534,198.

When the coating composition is an oil-in-water emulsion having water as the continuous phase and a discontinuous oil phase, the active will be droplets of a composition such as film forming organic silioxanes, dimethicone, esters, natural and synthetic waxes, mineral oil, naphthenic or paraffinic hydrocarbons, solvents, nonvolatile organic water repellant compositions, low viscosity silicone fluids, reactive and non-reactive amino functional polysiloxanes, and mixtures thereof. The oil phase is present in an amount of about 0.001 to about 80% by weight based upon the weight of the coating composition, The ranges of about 5 to 50% by weight and 10 to 40% are preferred.

The use of a nonvolatile organic water repellant active in the compositions of the invention is done in a conventional manner, such as in U.S. Patent No. 5,462,587. Actives which themselves are liquids (e.g., linseed oil) can be used. In addition, actives which are normally solids can be dissolved in an organic solvent or heated to their softening point to form the necessary liquid for the formation of an emulsion with water.

Natural and synthetic waxes are useful and can be paraffinic waxes, microcrystalline waxes, mineral waxes, vegetable waxes, animal waxes, hydrocarbon waxes, organometallic waxes (such as aluminum stearates, sodium stearates, and zinc stearates), polyoxoaluminum monostearate, hydrogenated oil waxes, chlorinated waxes, and mixtures of such waxes. Paraffin waxes generally contain about 14 different straight chain and branched hydrocarbons ranging from C₁₈H₃₈ to C₃₂H₆₆ and solidify between about 27^{°}C and about 70^{°}C (between about 80^{°}F and about 158^{°}F). According to this invention, the preferred paraffin waxes have melting points in the range of about 50^{°}C to about 70^{°}C, more preferably from 55^{°}C to 65^{°}C, for long-term durability of water-repellant properties. Also included are hydrocarbon resins as inert hydrophobic fillers to provide the coating composition with an additional solid base and binder for the wax or other components. Such a hydrocarbon resin imparts the coating composition with long term durability. Among the hydrocarbon resins which can be used in the invention, there can be mentioned aromatic hydrocarbon resins, aliphatic resins and mixtures thereof. Typical aromatic resins include indene, styrene, methylindenes and methyl styrene. Typical aliphatic resins include cis-and trans-piperylene. Polyisobutylene, a highly viscous hydrocarbon, can be used as a filler and provides long term durability and flexibility to the coatings made from the compositions of the invention. Preferred hydrocarbon resins include a hydrogenated C5 hydrocarbon resin with a dropping point temperature of about 140°C, which are well known commercially available compositions. The preferred C5 resin is Escarez® 5340 available from Exxon Chemical. Other useful C5 resins include Eastotac® resins available from Eastman Chemical Company and Nevrez® resins available from Neville. Mixtures of hydrocarbon resins are also useful. Particularly preferred are mixtures of hydrogenated C5 resins and polyisobutylene.

Other nonvolatile organic water repellant compositions that can be used include silicone resins (for example, Corning Fluid 200), fluoroalkyl resins, such as Dupont Zonyl® PHS, alkyds, including long oil and medium oil alkyds, and drying oils such as linseed oil and tung oil.

The coating compositions can also include preservatives such as 3-iodo-2-propenyl butyl carbamate (commercially available as Polyphyse® P100 available from Troy Chemical Co.), copper nathanate, zinc nathanate, chlorothalanil (tetrachloroisophthalonitrile) and 2-(thiocyanomethylthio)benzothiazole. Useful preservatives include those above which provide for preservation of the coated composition against, for example, mildew, as well as bacteriostatic preservatives which protect the composition in the container before application. A particularly useful bacteriostatic preservative is a bicyclic oxazolidines solution, commercially available as Nuosept® 95 available from Huls America Inc. This active also serves the function of neutralizing the rheology modifying polymer.

Other materials, which are not actives, that can be added to the compositions, as is common to such compositions, include fragrances, dyes, pigments, colorants, fluorescent whitening agents, neutralizing agents, buffers, chelating agents, and alkalinity adjusting agents. Useful pigments include red iron oxide, yellow iron oxide, titanium dioxide, and brown iron oxide. These other materials are present in conventional amounts.

The coating composition can include other agents, such as linear carboxylic acid polymers, such as Good-rite® K-702 or K-752 polymers, available from The BF Goodrich Company, wetting performance enhancers such as glycol or other polyhydric alcohols, ultraviolet (UV) light absorbers, fragrances, such as pine oil, benzaldehyde, or lemon oil, or other typical coating composition modifiers.

The coating compositions are made by blending the ingredients. There is no criticality in the order of addition of the ingredients, but the composition can be made by adding the polymer to the water, then adding the oil phase, and then adding the superwetting agent. If a UV absorber is incorporated, it can be added to the oil phase component.

There is no criticality in the particle size of the droplets which comprise the oil phase. However, it is possible to adjust the particle size using high kinetic energy devices such as high-pressure homogenizers, microfluidizers, ultrasonic wave generators, and colloid mills which tend to reduce the particle size. Such techniques are taught in U.S. Patent No. 5,338,345.

### EXAMPLES

In order to illustrate the present invention, examples of aqueous coating compositions were made and tested to determine the characteristics of the coating, especially the wetting character or uniformity of the coating. The following examples are provided to show various aspects of the present invention without departing from the scope and spirit of the invention. Unless otherwise indicated, all parts and percentages used in the examples are by weight based upon the total weight of the composition. In the Examples, the viscosities reported were run at 20°C on a Brookfield Viscometer Model RVT-DV-II+ with the appropriate spindle at 20 rpm. The particle size of the droplets reported in the Examples can be measured in a conventional manner, such as light microscopy, preferably using a Leeds and Northrop FRA analyzer. The surface tension of the various super-wetting agents reported in the Examples was measured by the DuNouy method at 0.1% surfactant concentration using a Kruss K-12 tensiometer. The surface tension of the final composition also was measured by the DuNouy method.

### EXAMPLE 1

This Example illustrates the benefits of the present invention in a silicone emulsion composition which is especially useful for use on rubber surfaces, such as automotive tires. The base formula is as follows:

| Ingredients | % by Weight |
|---|---|
| Water | balance to 100% |
| Hydrophobically modified polyacrylic acid copolymer ¹ | 0.20 |
| 100 centistoke (cSt) silicone oil ² | 20.00 |
| Superwetting Agent (see Table 1) | 0.50 |
| Triethanolamine | to pH 6 |
| Na₂ EDTA | 0.20 |
| | 100.00 |

| | |
|---|---|
| ¹ Pemulen 1622 from BFGoodrich | |
| ² DC 200 Fluid from Dow Corning | |

The composition was prepared by first dispersing the hydrophobically modified polyacrylic acid copolymer into the water. This was followed by the addition of the silicone oil and the super-wetting agent with good agitation. The composition was then neutralized with triethanolamine to the target pH. The viscosity of the composition was then reduced via the addition of Na₂ EDTA. All formulas showed good emulsion characteristics. The composition was then placed into a bottle with a spray applicator and sprayed onto automobile tires. The composition was not rubbed or buffed in any manner. Visual observations were made as to the surface wetting characteristics of the composition. The results for compositions containing various types of super wetting agents are listed in Table 1.

**TABLE 1**

| Composition | Superwetting Agent | Droplet Size (micron) | Application result |
|---|---|---|---|
| 1 | None | | beading |
| 2 | DC Q2-5211 ¹ | 7-8 | complete, uniform wetting |
| 3 | Zonyl FSO ² | 15-60 | beading |
| 4 | Fluorad FC-171 ³ | 10-35 | beading |

| | | | |
|---|---|---|---|
| ¹ Dow Corning | | | |
| ² E.I. DuPont | | | |
| ³ 3M Corp. | | | |

### EXAMPLE 2

This Example illustrates the use of the present invention in a silicone emulsion composition which is useful for use on automotive interior vinyl surfaces, but which can be used for other surfaces. It also illustrates the use of the present invention in a coating composition having a relatively low viscosity. The base formula is as follows:

| Ingredients | % by Weight |
|---|---|
| Water | balance to 100% |
| Hydrophobically modified polyacrylic acid copolymer ¹ | 0.20 |
| 100 cSt silicone oil ² | 20.00 |
| Superwetting Agent (see Table 2) | 0.50 |
| Triethanolamine | to pH 6 |
| Good-Rite K-752 ³ | 0.25 |
| | 100.00 |

| | |
|---|---|
| ¹ Pemulen 1622 from BFGoodrich | |
| ² DC 200 Fluid from Dow Corning | |
| ³ BFGoodrich | |

The composition was prepared by first dispersing the hydrophobically modified polyacrylic acid copolymer into the water. This was followed by the addition of the silicone oil and the super wetting agent with good agitation. The composition was then neutralized with triethanolamine to the target pH. The viscosity of the composition, which was 3300 cP, was then reduced via the addition of the Good-Rite K-752 polymer to 750 cP. All formulas showed good emulsion characteristics. The composition was then placed onto various types of surfaces: rubber, vinyl, and maple wood. The application was rubbed onto the rubber surface and drawn down to form a 0.01 mm film on the vinyl and wood surfaces. Visual observations were made as to the surface wetting characteristics of the composition. The results for various types of super wetting agents are listed in Table 2.

**TABLE 2**

| Composition | Superwetting Agent | Rubber | Vinyl | Maple Wood |
|---|---|---|---|---|
| 5 | DC Q2-5211 ¹ | uniform wetting | uniform wetting | uniform wetting |
| 6 | Zonyl FSO ² | beading | uniform wetting | uniform wetting |
| 7 | Fluorad FC- 171 ³ | beading | beading, pocketing | beading |
| 8 | Tween 20 ⁴ | beading | beading, pocketing | beading |

| | | | | |
|---|---|---|---|---|
| ¹ Dow Corning | | | | |
| ² E.I. DuPont | | | | |
| ³ 3M Corp. | | | | |
| ⁴ ICI (Sorbitan monolaurate; surface tension = 37 dynes/cm at .1% actives) | | | | |

### EXAMPLE 3

This Example illustrates the use of the present invention in a silicone emulsion composition which also is useful for use on automotive interior vinyl surfaces and which uses a higher viscosity silicone oil than in Example 2. The base formula is as follows:

### Composition 9

| Ingredients | % by Weight |
|---|---|
| Water | balance to 100% |
| Crosslinked polyacrylic acid homopolymer ¹ | 0.40 |
| 350 cSt silicone oil ² | 20.00 |
| DC Q2-5211 Superwetting Agent ³ | 0.50 |
| Triethanolamine | to pH 6.78 |
| Good-Rite K-752 ⁴ | 2.50 |
| | 100.00 |

| | |
|---|---|
| ¹ Carbopol 941 from BFGoodrich | |
| ² DC 200 Fluid from Dow Corning | |
| ³ Dow Corning | |
| ⁴ BFGoodrich | |

The composition was prepared by first dispersing the polyacrylic acid homopolymer into the water. This was followed by the addition of the silicone oil and the super wetting agent with good agitation. The composition was then neutralized with triethanolamine to the target pH. The viscosity of the composition was then reduced from 3600 cP to 420 cP via the addition of the Good-Rite K-752 polymer. The composition showed good emulsion characteristics. The product was stable for over 4 weeks at 50°C and passed 5 freeze/thaw cycles.

### EXAMPLE 4

This Example illustrates a high loading silicone emulsion containing a Super-Wetting Agent. This composition may be useful in its high active form as a polish. It can also be diluted with water to lower the viscosity and allow the composition to be easily sprayed.

### Composition 10

| Ingredients | % by Weight |
|---|---|
| Water | balance to 100% |
| Hydrophobically modified polyacrylic acid copolymer ¹ | 0.15 |
| 350 cSt silicone oil ² | 60.00 |
| DC Q2-5211 ³ | 0.50 |
| Triethanolamine | to pH 6.7 |
| | 100.00 |

| product as is | |
|---|---|
| pH | 6.7 |
| viscosity | 6,200 cP |

| 1:2 dilution with water | |
|---|---|
| pH | 6.9 |
| viscosity | 75 cP |

| | |
|---|---|
| ¹ Pemulen 1622 from BFGoodrich | |
| ² DC 200 Fluid from Dow Corning | |
| ³ Dow Corning | |

The composition was prepared by first dispersing the Hydrophobically modified polyacrylic acid copolymer into the water. The silicone oil was then added followed by the DC Q2-5211 superwetting agent with good agitation. The composition was then neutralized with triethanolamine to the target pH. For dilution, 1 part product was added to 2 parts water with gentle mixing.

### EXAMPLE 5

This Example illustrates the effect of EDTA on reducing the viscosity of emulsions while maintaining good product stability. The base formula is as follows:

| Ingredients | % by Weight |
|---|---|
| Water | balance to 100% |
| Hydrophobically modified polyacrylic acid copolymer ¹ | 0.20 |
| 100 cSt silicone oil ² | 20.00 |
| DC Q2-5211 ³ | 0.50 |
| Triethanolamine | to pH 6 |
| Na₂EDTA (see Table 3) | 0.00 to 0.60 |
| | 100.00 |

| | |
|---|---|
| ¹ Pemulen 1622 from BFGoodrich | |
| ² DC 200 Fluid from Dow Corning | |
| ³ Dow Corning | |

The composition was prepared by first dispersing the hydrophobically modified polyacrylic acid copolymer into the water. This was followed by the addition of the silicone oil and the DC Q2-5211 superwetting agent with good agitation. The composition was then neutralized with triethanolamine to the target pH. The viscosity of the composition was then reduced via the addition of EDTA as shown in Table 3. The surface wettability of all of the compositions was very good, comparable to Composition 1. The compositions were also subjected to freeze / thaw stability testing to determine product phase stability. The composition was placed into a 0^{°}C freezer for 24 hours. The product was then removed from the freezer and allowed to equilibrate to room temperature, ∼20^{°}C. Visual observations of the product were recorded.

**TABLE 3**

| Composition | Na₂EDTA (% by wt.) | Viscosity (cP) | pH | Droplet Size (micron) | Freeze/Thaw Stability |
|---|---|---|---|---|---|
| 11 | 0.00 | 3,300 | 6.25 | <7 | pass 1 cycle |
| 12 | 0.20 | 950 | 6.20 | <7 | pass 1 cycle |
| 13 | 0.40 | 450 | 6.15 | <7 | pass 1 cycle |
| 14 | 0.50 | 350 | 6.10 | <7 | pass 1 cycle |
| 15 | 0.60 | 450 | 6.05 | <7 | fail |

### EXAMPLE 6

This Example illustrates the effect of linear polyacrylate polymers on reducing the viscosity of emulsions while maintaining good product stability. The base formula is as follows:

| Ingredients | % by Weight |
|---|---|
| Water | balance to 100% |
| Hydrophobically modified polyacrylic acid copolymer ¹ | 0.20 |
| 100 cSt silicone oil ² | 20.00 |
| DC Q2-5211 ³ | 0.50 |
| Triethanolamine | to pH 6 |
| linear polyacrylate ⁴^{,}⁵ (see Table 4) | 0.20 and 0.50 |
| | 100.00 |

| | |
|---|---|
| ¹ Pemulen 1622 from BFGoodrich | |
| ² DC 200 Fluid from Dow Corning | |
| ³ Dow Corning | |
| ⁴ Good-Rite K-752 from BFGoodrich (2,100 MW) | |
| ⁵ Good-Rite K-702 from BFGoodrich (240,000 MW) | |

The composition was prepared by first dispersing the hydrophobically modified polyacrylic acid copolymer into the water. This was followed by the addition of the silicone oil and the DC Q2-5211 superwetting agent with good agitation. The composition was then neutralized with triethanolamine to the target pH. The viscosity of the composition was then reduced via the addition of the linear polyacrylate polymer as shown in Table 4. The surface wettability of all of the compositions was very good compared to Composition 1.

**TABLE 4**

| Composition | Polyacrylate Type | % by weight | Viscosity (cP) |
|---|---|---|---|
| 11 | none | 0.00 | 3,300 |
| 16 | Good-Rite K-752 | 0.20 | 710 |
| 17 | Good-Rite K-752 | 0.50 | 150 |
| 18 | Good-Rite K-702 | 0.20 | 1,010 |
| 19 | Good-Rite K-702 | 0.50 | 280 |

### EXAMPLE 7

This Example illustrates a silicone emulsion. This composition may be homogenized in order to reduce the product viscosity for low viscosity applications.

### Composition 20

| Ingredients | % by Weight |
|---|---|
| Water | balance to 100% |
| Hydrophobically modified polyacrylic acid copolymer ¹ | 0.30 |
| 1000 cSt silicone oil ² | 30.00 |
| DC Q2-5211 ³ | 0.30 |
| Triethanolamine | 0.50 |
| | 100.00 |

| product as is | |
|---|---|
| pH | 7.5 |
| viscosity | 2,740 cP |

| | |
|---|---|
| ¹ Pemulen 1622 from BFGoodrich | |
| ² DC 200 Fluid from Dow Corning | |
| ³ Dow Corning | |

The composition was prepared by first dispersing the hydrophobically modified polyacrylic acid copolymer into the water. The silicone oil was then added followed by the DC Q2-5211 superwetting agent with good agitation. The composition was then neutralized with triethanolamine to the target pH. The product was then homogenized using a High Pressure APV Rannie laboratory homogenizer. The effect on the product viscosity as a function of homogenization pressure and the number of cycles is presented in Table 5.

**TABLE 5**

| Cycle | Viscosity After Homogenization (cP) | | |
|---|---|---|---|
| | 3.000 PSI | 6.000 PSI | 9.000 PSI |
| 0 | 2,740 | 2,740 | 2,740 |
| 1 | 410 | 178 | 142 |
| 2 | 212 | 148 | 124 |
| 3 | 174 | 130 | - |
| 6 | 166 | 114 | 92 |
| 8 | 158 | 116 | 70 |
| 10 | 158 | 102 | 66 |

### EXAMPLE 8

This Example illustrates a silicone emulsion at a high concentration. This composition may be useful as a polish or it can be diluted with water for low viscosity applications.

### Composition 21

| Ingredients | % by Weight |
|---|---|
| Water | balance to 100% |
| Hydrophobically modified polyacrylic acid copolymer ¹ | 0.35 |
| 1000 cSt silicone oil ² | 60.00 |
| Glycerine | 2.00 |
| Diethylene glycol | 2.75 |
| DC Q2-5211 ³ | 2.00 |
| Triethanolamine | to pH 6.6 |
| Good-Rite K-752 ⁴ | 1.00 |
| | 100.00 |

| product as is | |
|---|---|
| pH | 6.6 |
| viscosity | 6,000 cP |

| 1:2 dilution with water | |
|---|---|
| pH | 7.4 |
| viscosity | 50 cP |

| | |
|---|---|
| ¹ Pemulen 1622 from BFGoodrich | |
| ² DC 200 Fluid from Dow Corning | |
| ³ Dow Corning | |
| ⁴ BFGoodrich | |

The composition was prepared by first dispersing the hydrophobically modified polyacrylic acid copolymer into the water. The silicone oil was then added followed by the glycerine and diethylene glycol with good mixing. The DC Q2-5211 superwetting agent was then added with good agitation. The composition was then neutralized with triethanolamine to the target pH followed by the addition of the Good-Rite® K-752. The product was then homogenized using a High Pressure APV Rannie laboratory homogenizer at 6,000 PSI for 1 cycle. For the dilution, the product was diluted in a 1:2 ratio with water (reducing the silicone concentration to 20%). Both the concentrated and diluted product were stable for 4 weeks at 50°C and both passed 5 freeze/thaw cycles. Application of both products to a rubber surface resulted in a smooth and uniform film.

### EXAMPLE 9

This Example illustrates a silicone emulsion containing a UV absorber. This composition is especially useful for interior automotive vinyl surfaces where added protection from UV degradation is beneficial:

### Composition 22

| Ingredients | % by Weight |
|---|---|
| Water | balance to 100% |
| Hydrophobically modified polyacrylic acid copolymer ¹ | 0.15 |
| C2-0563 Repellent ² | 1.80 |
| Tinuvin 328 ³ | 0.20 |
| 1000 cSt silicone oil ⁴ | 20.00 |
| DC Q2-5211 ⁵ | 0.50 |
| Triethanolamine | to pH 6.2 |
| linear polyacrylate ⁶ | 0.25 |
| | 100.00 |

| | |
|---|---|
| ¹ Pemulen 1622 from BFGoodrich | |
| ² Dow Corning | |
| ³ Ciba Geigy | |
| ⁴ DC 200 Fluid from Dow Corning | |
| ⁵ Dow Corning | |
| ⁶ Good-Rite K-752 from BFGoodrich (2,100 MW) | |

The composition was prepared by first dispersing the hydrophobically modified polyacrylic acid copolymer into the water. The UV absorber, Tinuvin 328, was then dissolved in the C2-0563 Repellent. This premix was then added to the silicone oil. The silicone oil-UV absorber blend was then added to the water-polymer mixture followed by the DC Q2-5211 superwetting agent with good agitation. The composition was then neutralized with triethanolamine to the target pH. The viscosity of the composition was then reduced via the addition of the linear polyacrylate. The surface wettability of all of the compositions was very good, comparable to Composition 1. The viscosity was less than 300 cP. The product passed 1 freeze / thaw stability cycle.

### EXAMPLE 10

This Example illustrates a composition which is useful as an all-purpose detergent cleaner, especially for use on glass and windows.

| Ingredients | % by Weight |
|---|---|
| Water | balance to 100% |
| Hydrophobically modified polyacrylic acid copolymer ¹ | 0.10 |
| Isopropanol | 5.00 |
| Ammonium hydroxide | to pH 9.5 |
| Wetting Agent (see Table 6) | 0.25 |
| Propylene glycol methyl ether ² | 2.00 |
| | 100.00 |

| | |
|---|---|
| ¹ Carbopol ETD 2623 from BFGoodrich | |
| ² Dowanol PM from Dow Chemical | |

The composition was prepared by first dispersing the hydrophobically modified polyacrylic acid copolymer into the water. This was followed by the addition of the isopropanol, ammonium hydroxide, superwetting agent, and the propylene glycol methyl ether.
The compositions were then sprayed on to a vertical glass window. The surface film characteristics (wetting, uniformity, texture, clarity, etc.) were observed and recorded. The wet films were rank ordered and are presented below in the order of worst to best (Composition 23 had the worst surface film and Composition 33 had the best). Note also that Composition 24 contains no wetting agent and no polymer.

**TABLE 6**

| Composition | Wetting Agent Type | Wetting Agent Surface Tension (cP) | Composition Surface Tension (cP) | Wet Film Characteristics |
|---|---|---|---|---|
| 23 | none | -- | 51.2 | very rough, orange peel |
| 24 | none and no polymer | -- | 47.6 | beaded instantly |
| 25 | sodium lauryl sulfate | 35.8 | 35.4 | very foamy, pockets |
| 26 | alkyl benzene sulfonate | 34.0 | 35.2 | very foamy, pockets |
| 27 | Tween 20 ¹ | 36.6 | 32.6 | orange peel, clear film |
| 28 | Tergitol® 15-S-7 ² | 27.3 | 28.2 | smooth and clear |
| 29 | Fluorad FC-120 ³ | 22.4 | 26.0 | smooth, clear pockets |
| 30 | DC Q2-5211 ⁴ | 21.1 | 21.6 | smooth but hazy |
| 31 | Silwet L-7600 ⁵ | 25.2 | 21.4 | smooth but hazy |
| 32 | Zonyl FSO ⁶ | 19.0 | 15.8 | smooth but hazy |
| 33 | Zonyl FSP ⁶ | 24.4 | 13.3 | smooth and clear |
| 34 | Fluorad FC-171 ³ | 20.0 | -- | orange peel, did not level, formulation went cloudy (an indication that this Fluorad was not soluble in the system) |

| | | | | |
|---|---|---|---|---|
| ¹ ICI | | | | |
| ² Union Carbide | | | | |
| ³ 3M | | | | |
| ⁴ Dow Corning | | | | |
| ⁵ Union Carbide | | | | |
| ⁶ EI DuPont | | | | |

### EXAMPLE 11

This Example illustrates improved wetting characteristics of this present invention across different types of polymeric additives.

| Ingredients | % by Weight |
|---|---|
| Water | balance to 100% |
| Polymeric Additive (see Table 7) | see below |
| Isopropanol | 5.00 |
| Ammonium hydroxide | to pH 9.5 |
| Wetting Agent (see Table 7) | 0.25 |
| Propylene glycol methyl ether ¹ | 2.00 |
| | 100.00 |

| | |
|---|---|
| ¹ Dowanol PM from Dow Chemical | |

The composition was prepared by first dispersing the polymeric additive into the water. This was followed by the addition of the isopropanol. The composition was then neutralized to pH 10 with ammonium hydroxide. The wetting agent and the propylene glycol methyl ether were then added. The compositions were then sprayed on to a vertical glass window. The surface film characteristics (wetting, uniformity, texture, clarity, etc.) were observed and recorded.

**TABLE 7**

| Composition | Polymeric Additive | Wetting Agent | Polymeric Additive (% by wt.) | Wet Film Characteristics |
|---|---|---|---|---|
| 35 | Carbopol ETD 2623 ¹ | Biosoft S-100 ³ | 0.10 | very foamy, pockets |
| 36 | Carbopol 941 ¹ | Biosoft S-100 ³ | 0.10 | very foamy, pockets |
| 37 | Accusol ICS-1 ² | Biosoft S-100 ³ | 0.40 | very foamy, pockets |
| 38 | Carbopol ETD 2623 ¹ | Zonyl FSP ⁴ | 0.10 | smooth and clear |
| 39 | Carbopol 941 ¹ | Zonyl FSP ⁴ | 0.10 | smooth and clear |
| 40 | Accusol ICS-1 ² | Zonyl FSP ⁴ | 0.40 | smooth and clear |

| | | | | |
|---|---|---|---|---|
| ¹ BFGoodrich | | | | |
| ² Rohm & Haas | | | | |
| ³ alkyl benzene sulfonate from Stepan Company | | | | |
| ⁴ E.I. DuPont | | | | |

The above examples illustrate that the present invention can be used to deliver actives in the form of solutions, suspensions, and emulsions, at various viscosities. The above examples also illustrate that the present invention can be used to produce coatings exhibiting vertical cling, as well as improved coating and filming characteristics.

The foregoing embodiments of the present invention have been presented for purposes of illustration and description. These description and embodiments are not intended to be exhaustive or to limit the invention to the precise form disclosed, and obviously many modifications and variations are possible in light of the above disclosure. The embodiments were chosen and described in order to best explain the principle of the invention and its practical applications to thereby enable others skilled in the art to best utilize the invention in its various embodiments and with various modifications as are suited to the particular use contemplated. It is intended that the invention be defined by the following claims.

## Claims

1. An aqueous coating composition comprising an active dissolved, suspended, or emulsified in water, an effective amount of a rheology modifying polymer, and a surface tension modifying agent having a surface tension of less than 35 dynes per centimeter for modifying the flow characteristics to provide an improved wetting or uniform coating of the coating composition.

2. The coating composition of claim 1 wherein said rheology modifying polymer is a crosslinked polyacrylic acid homopolymer.

3. The coating composition of claim 1 wherein said rheology modifying polymer is a crosslinked polyacrylic acid copolymer.

4. The coating composition of claim 1 wherein said rheology modifying polymer comprises a hydrophobically modified polyacrylic acid polymer.

5. The coating composition of claim 1 wherein said surface tension modifying agent comprises a silicone glycol copolymer superwetting agent.

6. The composition according to claim 1 which further contains a linear polyacrylic acid polymer.

7. The composition according to claim 1 which has been subjected to high kinetic energy to lower the viscosity of the composition and the particle size of the droplets of the oil phase.

8. The composition according to claim 1 wherein the surface tension modifying agent is present in an amount of between about 0.01 and about 10 % by weight based upon the weight of the coating composition.

9. The composition according to claim 1 wherein the surface tension modifying agent is present in an amount of between about 0.05 and about 5 % by weight based upon the weight of the coating composition.

10. The composition according to claim 1 wherein the surface tension modifying agent is present in an amount of between about 0.1 and about 5 % by weight based upon the weight of the coating composition.

11. The composition according to claim 1 wherein the surface tension modifying agent is present in an amount of between about 0.05 and about 2 % by weight based upon the weight of the coating composition.

12. The composition according to claim 1 wherein said rheology modifying polymer is present in an amount of between about 0.001 and about 10% by weight based upon the weight of the coating composition.

13. The composition according to claim 1 wherein said rheology modifying polymer is present in an amount of between about 0.01 and about 5% by weight based upon the weight of the coating composition.

14. The composition according to claim 1 wherein said rheology modifying polymer is present in an amount of between about 0.05 and about 1% by weight based upon the weight of the coating composition.

15. The composition according to claim 1 wherein said active is present in an amount of between about 0.001 and 80% by weight based upon the coating composition.

16. The composition according to claim 1 wherein said active is present in an amount of between about 5 and 50% by weight based upon the coating composition.

17. The composition according to claim 1 wherein said active is present in an amount of between about 10 and 40% by weight based upon the coating composition.

18. The composition according to claim 1 wherein said rheology modifying polymer is C₁₀ to C₃₀ alkylacrylate cross polymer.

19. The composition according to claim 1 which further includes a UV absorber.

20. The composition according to claim 1 wherein the rheology modifying polymer also functions to suspend or emulsify the deliverable composition.

21. The composition according to claim 1 wherein said rheology modifying polymer is a crosslinked copolymer of acrylic acid and a vinyl decanoate.

22. The composition according to claim 1 further including a linear polyacrylate polymer having a molecular weight of about 800 to about 250,000.

23. The composition according to claim 22 wherein the molecular weight is about 800 to about 2500.

24. The composition according to claim 1 wherein said surface tension modifying agent has a surface tension of less than 31 dynes per centimeter, at 0.1 % concentration.

25. The composition according to claim 1 wherein said surface tension modifying agent has a surface tension of less than 30 dynes per centimeter, at 0.1 % concentration.

26. The composition according to claim 1 wherein said rheology modifying polymer comprises an alkali soluble acrylic polymer emulsion.

27. The composition according to claim 1 wherein said rheology modifying polymer comprises a crosslinked copolymer of ethyl acrylate and methacrylic acid.

28. The coating composition of claim 1 wherein said active is selected from the group consisting of solvents, surfactants, film forming agents, conditioning agents, oxidizing agents, and mixtures thereof.

29. The coating composition of claim 1 wherein said active comprises a solid suspened in water.

30. The coating composition of claim 1 wherein said active comprises a discontinuous oil phase of an oil-in-water emulsion having water as a continuous phase, said active being selected from the group consisting of silicone, dimethicone, esters, waxes, mineral oil, naphthenic or paraffinic hydrocarbons, solvents, and mixtures thereof.
